# EUROPÄISCHE PATENTSCHRIFT

(11) **EP 0 906 530 B1**
(45) Veröffentlichungstag und Bekanntmachung des Hinweises auf die Patenterteilung: **22.01.2003**
(21) Anmeldenummer: 97927079.0
(22) Anmeldetag: 29.05.1997
(51) Int. Cl.: F16K 27/04

(54) **SANITÄRE ARMATUR MIT EINER KARTUSCHE**
SANITARY FITTING WITH A CARTRIDGE
ROBINETTERIE SANITAIRE COMPORTANT UNE CARTOUCHE

(30) Priorität: 18.06.1996 AT 107596
(43) Veröffentlichungstag der Anmeldung: 07.04.1999
(73) Patentinhaber: Ideal-Standard GmbH & Co. OHG, 53121 Bonn (DE)
(72) Erfinder: BECKER, Albert, D-54516 Wittlich (DE)
(74) Vertreter: Puchberger, Rolf, Dipl. Ing.
(86) Internationale Anmeldenummer: EP9702802
(87) Internationale Veröffentlichungsnummer: WO97048928

(56) Entgegenhaltungen:
- EP-A- 0 569 910
- WO-A-96/30682
- DE-C- 3 606 098
- US-A- 5 402 827

## Beschreibung

Die Erfindung betrifft eine sanitäre Armatur mit einer Kartusche, einem Batteriekörper und einem Auslauf, der mit einem Gehäuse fest verbunden ist, das um den Batteriekörper schwenkbar ist, wobei das Gehäuse auf mindestens einem in einer im Batteriekörper vorgesehenen Nut befindlichen Gleitring gleitet.

Derartige Armaturen werden an solchen Orten verwendet, an denen mit einer Armatur mehrere Becken erreicht werden müssen, wie z.B. im Küchenbereich (EP-A-0 469 391).

Für die genaue Positionierung der Kartusche und des Batteriekörpers zueinander müssen diese beiden Elemente der sanitären Armatur gemäß dem Stand der Technik denselben Durchmesser aufweisen. Zur exakten Distanzierung des Kartuschenbodens zur ihm gegenüberliegenden Oberfläche des Batteriekörpers weist das Kartuschengehäuse an seinem unteren Ende Vorsprünge auf, die beim Stand der Technik am Umfangsbereich der oberen Fläche des Batteriekörpers aufsitzen. Um den Batteriekörper herum ist das verschwenkbare Gehäuse des Schwenkauslaufes vorgesehen, welches Gehäuse den Umfang der sanitären Armatur in diesem Bereich noch vergrößert. Um ein ansprechendes Äußeres der Armatur zu erhalten, wird meist die die Kartusche umgebende Abdeckkappe mit dem gleichen Außendurchmesser hergestellt, die auch der Schwenkauslauf hat, so daß diese beiden zylindrischen Elemente fluchten. Insgesamt ergibt sich dadurch eine voluminöse, klobig aussehende Armatur.

Ferner sind im Batteriekörper Nuten vorgesehen, in die Gleitringe eingesetzt sind, auf welchen das Gehäuse des Schwenkauslaufes läuft. Diese Nuten wurden beim Stand der Technik zusätzlich zu den Nuten vorgesehen, die die O-Ringe enthalten, welche dem Batteriekörper gegenüber dem Gehäuse des Schwenkauslaufes abdichten. Um alle Nuten vorsehen zu können, ergab sich eine bestimmte Mindestbauhöhe für die Armatur. Insgesamt sind deshalb die Schwenkauslaufarmaturen des Standes der Technik sowohl im Durchmesser als auch in der Bauhöhe größer als Armaturen mit festem Auslauf.

Es ist Aufgabe der vorliegenden Erfindung, eine sanitäre Armatur mit Schwenkauslauf so zu gestalten, daß gegenüber solchen Armaturen des Standes der Technik eine Verkleinerung der Außenabmessungen sowie Materialersparnis erreicht wird.

Die Aufgabe wird dadurch gelöst, daß der Durchmesser des Batteriekörpers kleiner als der Durchmesser der Kartusche ist und daß zwischen der Kartusche und dem Batteriekörper eine Distanzscheibe, vorzugsweise aus Kunststoff, angeordnet ist, die auf der der Kartusche zugewandten Seite mindestens den Durchmesser der Kartusche aufweist. Die Ansätze am Kartuschengehäuse können sich damit an der Distanzscheibe abstützen und der Batteriekörper kann in dem Maß kleiner gestaltet werden, daß der Außendurchmesser des Gehäuses des Schwenkauslaufes nur geringfügig größer ist als die Kartusche und mit einer die Kartusche umgebenden dünnen Abdeckkappe fluchtet. Der kleinere Batteriekörper führt einerseits zu einem zierlicheren Aussehen der sanitären Armatur und bedingt auch durch sein geringeres Volumen Materialeinsparungen, was insbesondere deshalb von Bedeutung ist, weil der Batteriekörper aus Metall gefertigt wird.

Ebenfalls zur Materialeinsparung und zur Verbesserung des äußeren Erscheinungsbildes führt eine sanitäre Armatur der eingangs genannten Art, bei der in der Nut für den Gleitring eine den Batteriekörper gegen das Gehäuse abdichtende Dichtung eingesetzt ist. Durch diese gemeinsamen Nuten für Gleitringe und Dichtungen ergibt sich eine wesentlich geringere Mindestbauhöhe für den Batteriekörper, wodurch die Gesamthöhe der sanitären Armatur verringert werden kann, was einerseits die Armatur in ihrem Aussehen zierlicher macht und andererseits wieder eine Materialersparnis, bei dem an sich sehr kostenaufwendigen Metallteil der sanitären Armatur bringt.

Bei einer besonderen Ausführungsform der sanitären Armatur sind am Umfang der Distanzscheibe vorzugsweise elastisch verformbare Stege angeordnet, zwischen die der untere Teil der Kartusche einsetzbar und auf die eine Abdeckkappe aufsteckbar ist. Dadurch ergibt sich eine einfache Montage der sanitären Armatur, eine genaue Positionierung der Kartusche gegenüber der Distanzscheibe sowie ein guter Sitz der Abdeckkappe.

Die Stege können vorzugsweise durch dünne, am Umfang der Distanzscheibe angeordnete Wände verbunden sein, wodurch verhindert wird, daß beim Aufsetzen der Abdeckkappe diese irrtümlich zwischen Kartusche und Steg gelangt.

Gemäß einer bevorzugten Ausführungsform der sanitären Armatur ist zusätzlich zur Distanzscheibe eine gemeinsame Nut für den Gleitring und eine den Batteriekörper gegen das Gehäuse abdichtende Dichtung vorgesehen. Damit werden die äußeren Abmessungen der sanitären Armatur so gering wie möglich gehalten und das Volumen des Batteriekörpers wird minimiert, wodurch es zu einer Materialersparnis kommt.

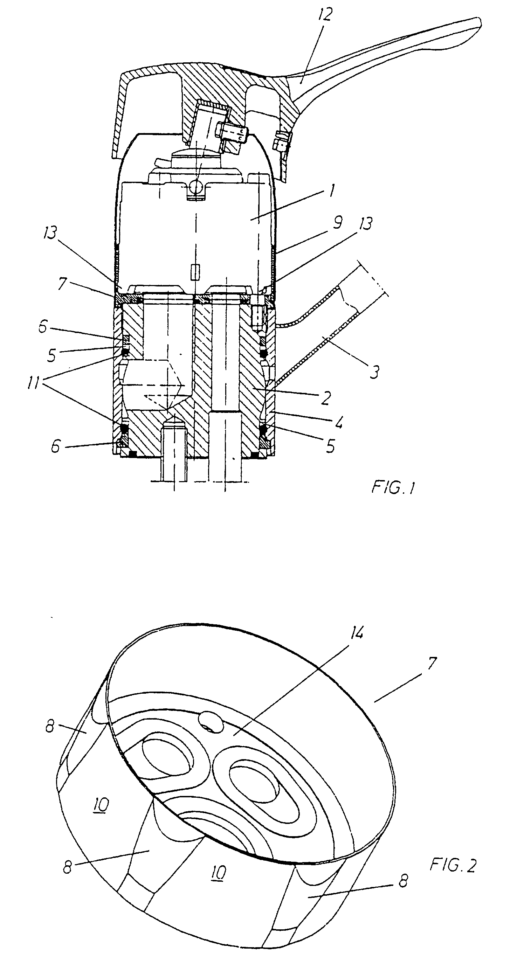

Die vorliegende Erfindung wird zur Veranschaulichung anhand der beiliegenden Zeichnungen beschrieben: Die Fig. 1 zeigt eine Einhandmischarmatur mit Schwenkauslauf im Längsschnitt; die Fig. 2 zeigt eine Distanzscheibe in einer Ansicht von schräg oben.

Die in Fig. 1 dargestellte Armatur enthält eine Kartusche 1, die über einen Hebel 12 bedienbar ist und die in ihrem unteren Teil von einer Distanzscheibe 7, wie sie in Fig. 2 dargestellt ist, umschlossen wird. Das Kartuschengehäuse weist am unteren Ende der Kartusche 1 Vorsprünge 13 auf, die sich am äußeren Umfang der der Kartusche 1 zugewandten Bodenfläche 14 der Distanzscheibe 7 abstützen. An der der Kartusche abgewandten Oberfläche der Bodenfläche 14 der Distanzscheibe 7 schließt der Batteriekörper 2 an, der einen geringeren Durchmesser als die Kartusche 1 aufweist. Im Batteriekörper 2 sind Nuten 5 vorgesehen, die jeweils einen Gleitring 6 und eine Dichtung 11 aufnehmen. Ein Gehäuse 4, das mit dem Auslauf 3 fest verbunden ist, kann auf den Gleitringen 6 gleitend um den Batteriekörper 2 verschwenkt werden.

Wie man in Fig. 2 sieht, weist die Distanzscheibe 7 eine Bodenfläche 14 auf, in welcher eine Kaltwasser- und eine Warmwasserdurchflußöffnung sowie eine Mischwasserdurchflußöffnung vorgesehen sind. Am Umfang der Distanzscheibe 7 sind Stege 8 vorgesehen, auf denen die die Kartusche 1 verkleidende Abdeckkappe 9 sitzt. Um bei der Montage zu verhindern, daß die Abdeckkappe 9 zwischen den Steg 8 und die Kartusche 1 gelangt, sind zwischen den Stegen 8 dünne Wände 10 vorgesehen.

Wie man in Fig. 1 sieht, ist der Außendurchmesser der Abdeckkappe 9 nur geringfügig größer als der Durchmesser der Kartusche 1 und der Außendurchmesser des um den Batteriekörper 2 schwenkbaren Gehäuses 4 fluchtet mit der Außenfläche der Abdeckkappe 9. Durch die Anordnung von jeweils einem Gleitring 6 und einer Dichtung 11 in einer gemeinsamen Nut 5 wird die Höhe des Batteriekörpers 2 gering gehalten. Insgesamt ist die dargestellte Armatur, im Gegensatz zu Armaturen des Standes der Technik mit gleicher Funktion, in etwa gleich groß wie eine Armatur ohne Schwenkauslauf.

## Patentansprüche

1. Sanitäre Armatur mit einer Kartusche (1), einem Batteriekörper (2) und einem Auslauf (3), der mit einem Gehäuse (4) fest verbunden ist, das um den Batteriekörper schwenkbar ist, wobei das Gehäuse (4) auf mindestens einem in einer im Batteriekörper vorgesehenen Nut (5) befindlichen Gleitring (6) gleitet, **dadurch gekennzeichnet, daß** der Durchmesser des Batteriekörpers (2) kleiner als der Durchmesser der Kartusche (1) ist und daß zwischen der Kartusche (1) und dem Batteriekörper (2) eine Distanzscheibe (7), vorzugsweise aus Kunststoff, angeordnet ist, die auf der der Kartusche (1) zugewandten Seite mindestens den Durchmesser der Kartusche (1) aufweist.

2. Sanitäre Armatur nach Anspruch 1, **dadurch gekennzeichnet, daß** am Umfang der Distanzscheibe (7) vorzugsweise elastisch verformbare Stege (8) angeordnet sind, zwischen die der untere Teil der Kartusche (1) einsetzbar und auf die eine Abdeckkappe (9) aufsteckbar ist.

3. Sanitäre Armatur nach Anspruch 2, **dadurch gekennzeichnet, daß** die Stege (8) durch dünne, am Umfang der Distanzschetbe (7) angeordnete Wände (10) verbunden sind.

4. Sanitäre Armatur nach einem der vorhergehenden Ansprüche, **dadurch gekennzeichnet, daß** in der Nut (5) für den Gleitring (6) eine den Batteriekörper (2) gegen das Gehäuse (4) abdichtende Dichtung (11) eingesetzt ist.

5. Sanitäre Armatur mit einer Kartusche (1), einem Batteriekörper (2) und einem Auslauf (3), der mit einem Gehäuse (4) fest verbunden ist, das um den Batteriekörper schwenkbar ist, wobei das Gehäuse (4) auf mindestens einem in einer im Batteriekörper vorgesehenen Nut (5) befindlichen Gleitring (6) gleitet, **dadurch gekennzeichnet, daß** in der Nut (5) für den Gleitring (6) eine den Batteriekörper (2) gegen das Gehäuse (4) abdichtende Dichtung (11) eingesetzt ist.

## Claims

1. Sanitary fitting having a cartridge (1), a battery body (2) and an outlet (3) which is fixedly connected to a housing (4) that can be swivelled about the battery body, with the housing (4) sliding on at least one sliding ring (6) located in a groove (5) provided in the battery body, **characterised in that** the diameter of the battery body (2) is smaller than the diameter of the cartridge (1) and **in that** arranged between the cartridge (1) and the battery body (2) there is a spacing washer (7), preferably made of plastics material, which has at least the diameter of the cartridge (1) on the side facing the cartridge (1).

2. Sanitary fitting according to claim 1, **characterised in.that** arranged on the circumference of the spacing washer (7) there are webs (8) that are preferably elastically deformable, between which the lower portion of the cartridge (1) can be inserted and onto which a covering cap (9) can be slipped.

3. Sanitary fitting according to claim 2, **characterised in that** the webs (8) are connected by means of thin walls (10) that are arranged on the circumference of the spacing washer (7).

4. Sanitary fitting according to one of the preceding claims, **characterised in that** a seal (11) that seals the battery body (2) with respect to the housing (4) is inserted in the groove (5) for the sliding ring (6).

5. Sanitary fitting having a cartridge (1), a battery body (2) and an outlet (3) which is fixedly connected to a housing (4) that can be swivelled about the battery body, with the housing (4) sliding on at least one sliding ring (6) located in a groove (5) provided in the battery body, **characterised in that** a seal (11) that seals the battery body (2) with respect to the housing (4) is inserted in the groove (5) for the sliding ring (6).

## Revendications

1. Robinet sanitaire comportant une cartouche (1), un corps (2) de distribution et un orifice (3) de sortie, qui est relié fixement à un boîtier (4), qui peut être pivoté par rapport au corps de distribution, le boîtier (4) glissant sur au moins un anneau (6) de glissement se trouvant dans une rainure (5) prévue dans le corps de distribution, **caractérisé en ce que** le diamètre du corps (2) de distribution est plus petit que le diamètre de la cartouche (1) et **en ce qu'**il est disposé entre la cartouche (1) et le corps (2) de distribution une rondelle (7) d'espacement, de préférence en matière plastique, qui, du côté tourné vers la cartouche (1), a au moins le diamètre de la cartouche (1).

2. Robinet sanitaire suivant la revendication 1, **caractérisé en ce que** sont disposées sur le pourtour de la rondelle (7) d'espacement de préférence des nervures (8) élastiques pouvant être déformées, entre lesquelles peut être insérée la partie inférieure. de la cartouche (1) et sur lesquelles peut être encliqueté un chapeau (9) de recouvrement.

3. Robinet sanitaire suivant la revendication 2, **caractérisé en ce que** les nervures (8) sont reliées par des parois (10) minces disposées sur le pourtour de la rondelle (7) d'espacement.

4. Robinet sanitaire suivant l'une des revendications précédentes, **caractérisé en ce qu'**un joint (11) d'étanchéité qui réalise l'étanchéité du corps (2) de distribution sur le boîtier (4) est inséré dans la rainure (5) pour l'anneau (6) de glissement.

5. Robinet sanitaire comportant une cartouche (1), un corps (2) de distribution et un orifice (3) de sortie, qui est relié fixement à un boîtier (4), qui peut pivoter par rapport au corps de distribution, le boîtier (4) glissant sur au moins un anneau (6) de glissement se trouvant dans une rainure (5) ménagée dans le corps de distribution, **caractérisé en ce qu'**il est inséré dans la rainure (5) pour l'anneau (6) de glissement un joint d'étanchéité (11) réalisant l'étanchéité du corps (2) de distribution sur le boîtier (4).
